# EUROPEAN PATENT APPLICATION

(11) **EP 2 878 239 A1**
(43) Date of publication of application: **03.06.2015**
(21) Application number: 13425153.7
(22) Date of filing: 28.11.2013
(51) Int. Cl.: A47J 27/00

(54) **Cooking vessel for induction cooktops**

(71) Applicant: Pensofal International S.p.A., 20127 Milano (IT)
(72) Inventor: Sollo, Giovanni, 20127 Milano MI (IT)
(74) Representative: Leone, Mario

(57) **Abstract**

The present disclosure relates to a cooking vessel (1), such as a pot or a pan, particularly suitable for use on induction cooktops, comprising a bottom part (5) made of a relatively soft metal material with a given first thickness, a coating layer (6) made of a relatively hard material, said coating layer (6) having a second thickness (S), a plurality of spikes (8), projecting out of the surface (9) of said coating layer (6) that faces said bottom part (5), said spikes (8) being arranged around the edge of holes (7) formed in said coating layer (6) and being force-fitted into the thickness of said bottom part (5) of the vessel, thereby joining said coating layer to said bottom part, characterized in that, before being force-fitted into the thickness of said coating layer (5) said spikes (8) project out of said surface (9) of the coating layer to a length ranging from 1.5 to 1.9 mm.

## Description

### Field of the invention

The present disclosure relates to a cooking vessel for induction cooktops.

### Discussion of related art

The present invention relates to a cooking vessel, such as a pot or a pan.

Particularly, the cooking vessel is adapted for use on induction cooktops. This cooking vessel comprises a bottom part made of a relatively soft metal material with a given first thickness, and a coating layer made of a relatively hard material. This coating layer has second thickness.

The coating layer further comprises a plurality of spikes, projecting out of the coating layer surface that faces the bottom part.

The spikes are arranged around the edge of holes formed in said coating layer and are force-fitted into the thickness of said bottom part of the vessel, thereby joining said coating layer to said bottom part.

Cooking vessels with a bottom that makes them particularly suitable for use on induction cooktops are known in the art.

A particularly effective type is disclosed in EP-A-1 052 055.

According to this prior art, the bottom part of the vessel is covered with a coating layer, which is secured to such bottom part by means of a plurality of spikes, formed by punching holes in the coating layer, and force-fitted by a press into the material of the bottom portion of the vessel.

Thus, a considerable portion of the heat generated by induction in the coating layer is transferred by conduction into the bottom part of the vessel, not only through the flat contacting surfaces, but also through the spikes that penetrate the material of the bottom part, which increase the overall area of heat exchange between the coating layer and the bottom part of the vessel, thereby largely compensating for any reduction of the currents induced in the coating layer, when the vessel is placed on the plate of the induction device, due to the presence of air trapped in the coating layer holes created to form the anchor spikes.

In the practical implementation of cooking vessels according to the technology as disclosed in EP-A-1 052 055, the application of the coating layer of harder metal material, such as steel, on the bottom part of the vessel made of a softer metal material, such as aluminum, by force-fitting of spikes using a press or a drop hammer was found to cause irregularities in the finishing product, on the surface of the vessel that is designed to rest on the plate of the induction device.

### SUMMARY OF THE INVENTION

Induction cooktops are known to require, for energy efficiency reasons, the use of vessels having a bottom whose outer surface can adhere as accurately as possible to the surface of the plate of the induction device, therefore the object of the present invention is to achieve as close to perfect flatness as possible in the surface of a vessel formed with the technology as disclosed in EP-A-1 052 055 that is designed to rest on the induction cooktop.

Such object is fulfilled by a vessel whose features are defined in claim 1 below.

### BRIEF DESCRIPTION OF THE DRA WINGS

The characteristics and advantages of the present disclosure will appear from the following detailed description of possible practical embodiments thereof, which are shown as non-limiting examples in the drawings, in which:
- Figure 1 shows a view of the rear part of a cooking vessel, namely a pan, of the invention, with a portion of the bottom exposed by omission of a portion of the coating layer;
- Figure 2 shows a front view of the coating layer before application to the bottom part of the vessel;
- Figure 3 shows a front view of the coating layer on the side opposite to that of Figure 2, with the spikes being visible;
- Figure 4 shows a partial cross sectional view of the coating layer before application to the bottom part of the cooking vessel.

### DETAILED DESCRIPTION

Even when this is not expressly stated, the individual features as described with reference to the particular embodiments shall be intended as auxiliary to and/or interchangeable with other features described with reference to other exemplary embodiments.

Referring to the above mentioned figures, numeral 1 generally designates a cooking vessel of the invention which is shown herein as a pan having a connection 2 for a handle, only a part whereof is shown, and referenced 3.

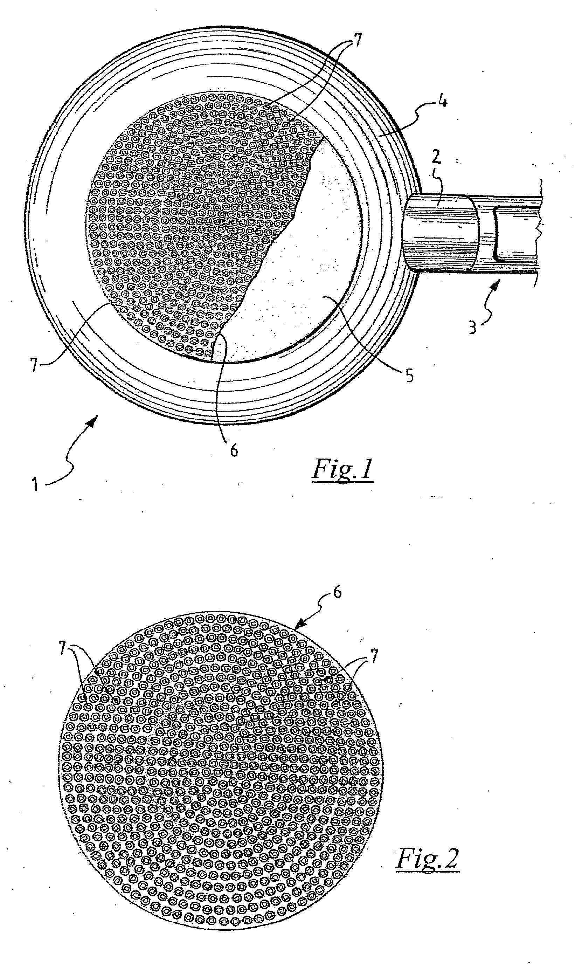

As viewed exteriorly from below, the vessel 1 comprises a rim 4 and a circular bottom 5, which is only partially shown in Figure 1, as it is covered with a plate or coating layer element 6, also having a circular shape, and having holes 7 therein.

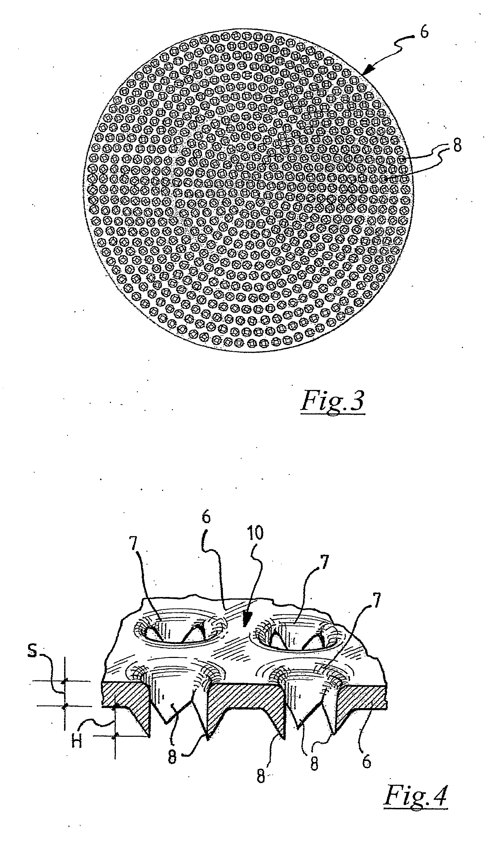

The circular bottom 5 of the vessel 1 is made of a relatively soft metal material, such as aluminum, having a given first thickness, whereas the coating layer 6 is made of a relatively hard metal material, such as ferritic steel, and in turn has a second thickness, referenced S in Figure 4.

According to the prior art, the coating layer 6 has a plurality of holes 7 which are formed, for instance, by punching, to create a plurality of spikes 8 projecting out of the surface 9 opposite to that through which the punch penetrates.

It shall be noted that several embodiments of the plurality of spikes 8 may be envisaged. For example, in a first variant, the hole 7 is designed to have a square shape, which may be obtained using a chamfered punch to obtain a substantially trapezoidal vertex of the spike 8; in a second variant, a square hole is obtained by a sharp punch which creates a substantially triangular vertex of the spike 8, with a sharp apex; in a third variant, similar to the first variant, a triangular hole is obtained using a punch having a triangular section, with vertices of the spike 8 having chamfered apices.

In any case, the vertices of the spikes 8 form, from their apices to the surface of the plate or coating layer element 6, a substantially conical conduit, whose cross section increases from the apices to the surface of the plate element 6.

The plan section of the conical conduit, i.e. its base surface, may have a polygonal, e.g. square, or a circular shape.

This conical conduit may have a very small opening, therefore the vertices of the spikes form an angle of 90° or more, preferably of more than 90°, with the coating layer 6.

The spikes 8 are thus arranged around each hole 7 and project out of the surface 9 with a predetermined height H.

According to the prior art, the coating layer 6 is applied to the bottom part 5 of the cooking vessel 1 by force-fitting the spikes 8 into the thickness of the bottom part 6 which, as mentioned above, is made of a metal material that is softer than the material that forms the coating layer 7.

After such compression, the coating layer 6, and particularly the surface of the coating layer that directly faces the bottom, is adhered to the bottom portion.

Here, the material of the bottom exhibits a particular behavior, in that it is softer than the material of the spikes 8 and is fitted into a conduit having an increasing section, and therefore tends to expand within each hole 7, thereby forming a sort of rivet that holds the coating layer secured to the bottom. This effect is caused by the shape of the conical conduit delimited by the projecting vertices of the spikes.

Furthermore, the vertices of the spikes are slightly inclined with respect to their original position, by the displacement and compression of the material of the bottom penetrated by the spikes. This will help to obtain a positive crimp fixation.

It shall be noted that the term crimp is intended to indicate that the end of each vertex of the spike 8 is bent from the original position, in which the spikes were forced into said thickness of the bottom. Thus, any displacement of the coating layer 6 in this original penetration direction is actually prevented.

Furthermore, this crimp effect adds stability to the connection between the coating layer and the bottom and, particularly when the pot is heated, also considering the different heat expansion coefficients of the bottom and the coating layer.

The layer 6 is applied to the bottom part 5 preferably using a press or a drop hammer.

According to the invention, the height H of the spikes 8 formed as a result of the creation of the holes 7, ranges from 1.5 to 1.9 mm and is preferably 1.7 mm, as measured before application of the layer 7 to the bottom part 6.

According to the invention, the diameter of each hole 7 ranges from 2.4 to 2.6 mm and is preferably 2.4 mm.

Still according to the invention, these holes 7 are arranged along circumferences concentric with one another and with the circular edge of said coating layer.

The overall thickness of the bottom of the coating vessel of the invention ranges from 1.6 mm to 10 mm.

Advantageously, with the use of these spikes 8 having a height H ranging from 1.5 to 1.9 mm, the vessel bottoms may have a thickness equal to the above mentioned lower limit, which is considerably smaller than the thickness of vessel bottoms as typically used in the prior art (e.g. vessel bottoms of 3 mm).

The above mentioned dimensional values allow the invention to achieve a superior flatness in the surface 10 that is designed to rest on the induction cooktop, thereby affording surprising energy efficiency results.

Tests were conducted and a vessel with a bottom formed according to the invention, laid on a conventional induction cooktop, was found to be able to raise the temperature of 75 mL water to the boiling point of 95° C, in 1.02 minutes, as compared with the 1.30 minutes required with a vessel having a bottom according to the prior art.

Those skilled in the art will obviously appreciate that a number of changes and variants as described above may be made to fulfill particular requirements, without departure from the scope of the invention, as defined in the following claims.

## Claims

1. A cooking vessel (1), such as a pot or a pan, particularly suitable for use on induction cooktops, comprising a bottom part (5) made of a relatively soft metal material with a given first thickness, a coating layer (6) made of a relatively hard material, said coating layer (6) having a second thickness (S), a plurality of spikes (8), projecting out of the surface (9) of the coating layer (6) that faces said bottom part (5), said spikes (8) being arranged around the edge of holes (7) formed in said coating layer (6) and being force-fitted into the thickness of said bottom part (5) of the vessel, thereby joining said coating layer to said bottom part, **characterized in that**, before being force-fitted into the thickness of said coating layer (5) said spikes (8) project out of said surface (9) of the coating layer to a length ranging from 1.5 to 1.9 mm.

2. A cooking vessel as claimed in claim 1, **characterized in that** said spikes (8) proj ect out of said surface (9) to a length (H) of 1.7 mm.

3. A cooking vessel as claimed in any of claims 1 and 2, **characterized in that** said bottom part (5) and said coating layer (6) have respective circular peripheral edges.

4. A cooking vessel as claimed in any of claims 1 to 3, **characterized in that** said holes (7) are arranged along circumferences concentric with one another and with the circular edge of said coating layer (6).

5. A cooking vessel as claimed in any of claims 1 to 4, **characterized in that** the diameter of said holes (7) ranges from 2.4 to 2.6 mm.

6. A cooking vessel as claimed in any of claims 1 to 5, **characterized in that** the diameter of said holes (7) is 2.5 mm.

7. A cooking vessel as claimed in any of claims 1 to 6, **characterized in that** the overall thickness of said bottom part (5) and said coating layer (6) applied to the bottom part (5) ranges from 1.6 to 10 mm.

8. A cooking vessel as claimed in any of claims 1 to 7, **characterized in that** the overall thickness of said bottom part (5) and said coating layer (7) applied to the bottom part (5) is 3,5 mm.

9. A cooking vessel as claimed in any of claims 1 to 7, **characterized in that** the vertices of said spikes (8) form, from their apex to the surface of said coating layer (6) a substantially conical conduit, whose cross section increases from the apices to the surface of said coating layer (6).

10. A cooking vessel as claimed in claim 9, **characterized in that** the opening of said conical conduit has a polygonal or circular plan section.
